# EUROPEAN PATENT APPLICATION

(11) **EP 1 870 831 A2**
(43) Date of publication of application: **26.12.2007**
(21) Application number: 07000798.4
(22) Date of filing: 16.01.2007
(51) Int. Cl.: G06F 21/02

(54) **Method and system for using one-time programmable (OTP) read-only memory (ROM) to configure chip usage features**

(30) Priority: 19.06.2006 US 814815 P; 27.09.2006 US 535912
(71) Applicant: Broadcom Corporation, Irvine, CA 92617 (US)
(72) Inventor: Baer, David, 95125 San Jose, CA (US); Sweet, James D., 94087 Sunnyvale, CA (US); Chen, Iue-Shuenn, 92127 San Diego, CA (US); Bowers, Heather, 95008 Campbell, CA (US); Beach, Jeffrey, 92127 San Diego, CA (US)
(74) Representative: Jehle, Volker Armin

(57) **Abstract**

Aspects of a method and system for using one-time programmable (OTP) read-only memory (ROM) to configure chip usage features are presented. Aspects of the system may include a one time programmable (OTP) memory on a chip that is configured to enable control of access to on-chip functions provided by on-chip modules. The chip may enable conditional activation or deactivation of on-chip functions provided by the on-chip modules in response to reception of an external activation or deactivation request based on the contents of the configured OTP memory.

## Description

### CROSS-REFERENCE TO RELATED APPLICATIONS/INCORPORATION BY REFERENCE

This application makes reference, claims priority to, and claims the benefit of United States Application Serial No. 60/814,815, which was filed June 19, 2006 and is hereby incorporated herein by reference in its entirety.

### FIELD OF THE INVENTION

Certain embodiments of the invention relate to integrated circuits. More specifically, certain embodiments of the invention relate to a method and system for using one-time programmable (OTP) read-only memory (ROM) to configure chip usage features.

### BACKGROUND OF THE INVENTION

In an increasingly security-conscious world, protecting access to information and/or to systems from unwanted discovery and/or corruption is a major issue for both consumers and businesses. Many consumer or business systems may be vulnerable to unwanted access when the level of security provided within the system is not sufficient for providing the appropriate protection. In this regard, consumer systems, such as multimedia systems, for example, may require the use of integrated architectures that enable security management mechanisms for defining and administering user rights or privileges in order to provide the necessary protection from unwanted access.

An example of a multimedia system that may be accessed by many different users may be a set-top box where manufacturers, vendors, operators, and/or home users may have an interest in accessing at least some limited functionality of the system. In some instances, a single device, such as a security processor for example, may be utilized to administer security operations in the multimedia system. The security processor may operate independently of other components in the multimedia system when determining rights or privileges of different vendors and/or users to various features in the multimedia system. For example, vendors may have limited access to some of the functions that may be accessible by the manufacturer. Home users may only have access to a subset of the vendors' access rights. In some instances, secure operations may be managed by specifying, in a single location, secure conditions for each security component supported by the system.

However, there may be several limitations with such a straightforward implementation. On a typical security system, the number of user modes and security components may be sufficiently large that the size of the security management and/or control information may require large amounts of memory. There may be a significant number of access control entries that may correspond to instances when access rights may not be granted and/or instances when the access rights may be the same for multiple user modes and/or for multiple security components, such as default settings, for example. The addition or removal of user modes or security components may pose various implementation challenges, which increases hardware and/or software complexity. As software and/or hardware complexity increases, it may become more challenging to manage security operations without introducing security breaches or other concerns.

Some integrated circuits or chips use wire bond pads to configure different aspects or features of in order to tailor the chip to exact customer requirements and/or specifications. These wire bond pads are connected on the substrate to either, for example, a logic "1" (+3.3V power) or a logic "0" (Ground). While this may be sufficient for most wire-bonded chips, some chips will have different requirements-for security and/or packaging that will require utilization of alternatives to wire bond pads.

While wire-bond packages are used for many current chips, alternative package options, such as flip chip, may not allow implementation of wire-bond options. For example, where wire bond options may provide the ability to configure chip usage features, by establishing connections between the chip die and the substrate at package assembly, this option may not be available with flip chip packaging where the connections between the chip die and the substrate may be established during die assembly.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and system for using one-time programmable (OTP) read-only memory (ROM) to configure chip usage features, substantially as shown in and/or described in connection with at least one of the figures, as set forth more completely in the claims.
According to an aspect of the invention, a method is provided for configuring an integrated circuit, the method comprising:
configuring a one time programmable (OTP) memory on a chip to securely control access to on-chip functions provided by on-chip modules; and
in response to receiving an external activation or deactivation request, activating or deactivating at least a portion of said on-chip functions provided by said on-chip modules based on said configuring of said OTP memory.
Advantageously, said OTP memory is a programmable read-only memory (PROM).
Advantageously, said OTP memory comprises at least one laser fuse.
Advantageously, the method comprises receiving an externally input security word in addition to said external activation or deactivation request.
Advantageously, said on-chip functions are selectively activated, or deactivated, based on said externally input security word, said external activation or deactivation request, and said configured OTP memory.
Advantageously, the method comprises adjusting a value for at least one electrical characteristic of said integrated circuit based on said configured OTP memory.
Advantageously, said at least one electrical characteristic comprises at least one of: a resistance value, a capacitance value, an inductance value, and a transconductance value.
According to an aspect of the invention, a machine-readable storage is provided having stored thereon, a computer program having at least one code section for configuring an integrated circuit, the at least one code section being executable by a machine for causing the machine to perform steps comprising:
configuring a one time programmable (OTP) memory on a chip to securely control access to on-chip functions provided by on-chip modules; and
in response to receiving an external activation or deactivation request, activating or deactivating at least a portion of said on-chip functions provided by said on-chip modules based on said configuring of said OTP memory.
Advantageously, said OTP memory is a programmable read-only memory (PROM).
Advantageously, said OTP memory comprises at least one laser fuse:
Advantageously, said at feast one code section comprises code for receiving an externally input security word in addition to said external activation or deactivation request.
Advantageously, said on-chip functions are selectively activated, or deactivated, based on said external activation or deactivation request, and said configured OTP memory.
Advantageously, said at least one code section comprises code for adjusting a value for at least one electrical characteristic of said integrated circuit based on said configured OTP memory.
Advantageously, said at least one electrical characteristic comprises at least one of: a resistance value, a capacitance value, an inductance value, and a transconductance value.
According to an aspect of the invention, a system for configuring an integrated circuit is provided, the system comprising:
a chip having a one time programmable (OTP) memory that is configured to enable control of access to on-chip functions provided by on-chip modules; and
said chip enables activation or deactivation of said on-chip functions provided by said on-chip modules, in response to reception of an external activation or deactivation request, based on said configured OTP memory.
Advantageously, said OTP memory is a programmable read-only memory (PROM).
Advantageously, said OTP memory comprises at least one laser fuse.
Advantageously, said chip enables reception of an externally input security word in addition to said external activation or deactivation request.
Advantageously, said on-chip functions are selectively activated, or deactivated, based on said externally input security word, said external activation or deactivation request, and said configured OTP memory.
Advantageously, said chip enables adjustment of a value for at least one electrical characteristic based on said configured OTP memory.
Advantageously, said at least one electrical characteristic comprises at least one of: a resistance value, a capacitance value, an inductance value, and a transconductance value.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is diagram illustrating an exemplary integrated circuit wire bond technique, which may be utilized in connection with an embodiment of the invention.

FIG. 2 is a block diagram of an exemplary system for configuring chip usage features in a wire bonded chip die, which may be utilized in connection with an embodiment of the invention.

FIG. 3 is a diagram illustrating an exemplary integrated circuit flip chip technique, which may be utilized in connection with an embodiment of the invention.

FIG. 4A is a block diagram illustrating exemplary use of internal one-time programmable (OTP) read-only memory (ROM) to configure chip usage features, in accordance with an embodiment of the invention.

FIG. 4B is a block diagram illustrating exemplary use of internal laser fuses to configure chip usage features, in accordance with an embodiment of the invention.

FIG. 5 is a diagram illustrating exemplary generation of bits to configure chip usage features, in accordance with an embodiment of the invention.

FIG. 6 is a diagram illustrating exemplary enabling of configuration bits for configuring chip usage features, in accordance with an embodiment of the invention.

FIG. 7 is a flow chart illustrating exemplary steps for utilizing OTP ROM for disabling chip usage features, in accordance with an embodiment of the invention.

FiG. 8 is a flow chart illustrating exemplary steps utilizing OTP ROM for enabling chip usage features, in accordance with an embodiment of the invention.

FIG. 9 is a flow chart illustrating exemplary steps for utilizing laser fuses for disabling chip usage features, in accordance with an embodiment of the invention.

FIG. 10 is a flow chart illustrating exemplary steps utilizing laser fuses for enabling chip usage features; in accordance with an embodiment of the invention.

### DETAILED DESCRIPTION OF THE INVENTION

Certain embodiments of the invention may be found in a method and system for using one-time programmable (OTP) read-only memory (ROM) to configure chip usage features. Various embodiments of the invention provide a means by which on-chip integrated circuit (IC) functions, or features, may be enabled or disabled based on stored binary information. In one embodiment of the invention, IC on-chip features may be enabled by setting a value for one or more bits that may be stored internally in an on-chip OTP ROM. The enabled chip features may be subsequently activated by setting a value for one or more bits in a configuration vector that may be communicated to the IC from an external source, for example a chip programming device. The chip may subsequently utilize the activated chip features during operation. One or more bits in a configuration vector may not activate a corresponding chip feature when the chip feature has not been enabled by a corresponding one or more internally stored bits. In another embodiment of the invention, internally stored bits may be generated by utilizing one or more laser fuses. In this embodiment, a chip feature may be enabled by exposing the one or more laser fuses to laser light. In various embodiments of the invention, chip features may be disabled by setting a value for one or more internally stored bits in a manner that is substantially similar to the methods described above.

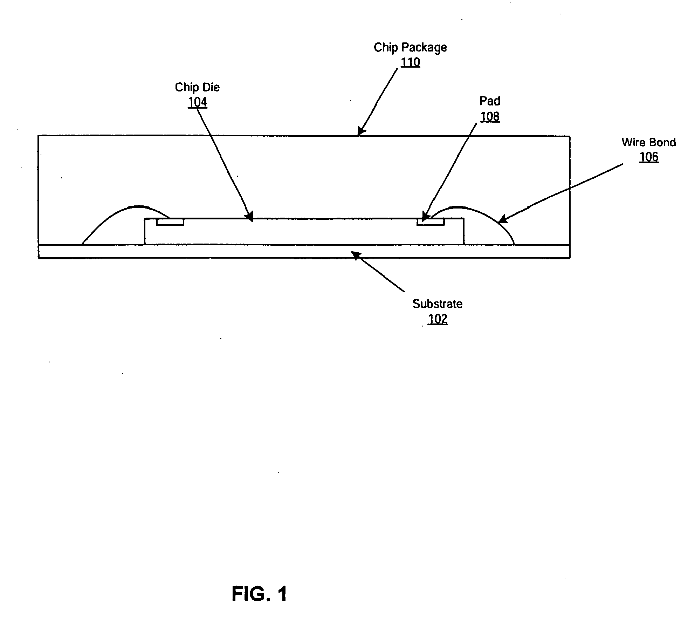

FIG. 1 is diagram illustrating an exemplary integrated circuit wire bond technique, which may be utilized in connection with an embodiment of the invention. Referring to FIG. 1, there is shown a substrate 102, a chip die 104, a wire bond 106, a pad 108, and a chip package 110. FIG. 1 illustrates a conventional packaging technique utilized for many IC devices. After IC wafer fabrication, the wafer may be divided into individual chip die 104, which are bonded to a substrate 102. The surface of the chip die 104 may be visible after bonding to the substrate 102 to enable pads 108, which are electrically coupled to nodes and/or devices on the chip die 104, to be electrically coupled to pins in the chip package 110 via wire bonds 106. Exemplary chip packages 110 may be made from plastic materials, or ceramic materials. Pins in exemplary chip packages 110 may be arranged in, for example, a dual in-line pin (DIP), a J-lead, or a pin grid array (PGA) configuration.

Various embodiments of the invention may provide lC manufactures with a secure method for enabling and/or disabling chip features that may not be subsequently defeated, or hacked, by customers to enable features that the IC manufacturer did not intend to make available to the customers. Various embodiments of the invention may also provide a means by which chip functionality may be tested before assembling the chip die into a chip package. Thus, a single test procedure may be uniformly utilized for a given chip die, as opposed to generating a plurality of test procedures for a given die that are customized based on how the chip die was assembled into a chip package. Furthermore, various embodiments of the invention may enable chip features to be enabled or disabled when the chip die surface is not visible after bonding to a substrate, as with flip chip devices.

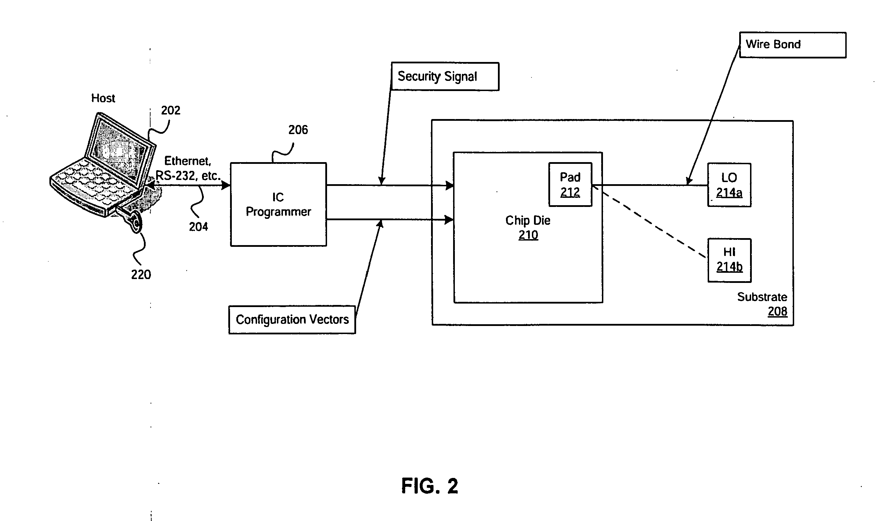

FIG. 2 is a block diagram of an exemplary system for configuring chip usage features in a wire bonded chip die, which may be utilized in connection with an embodiment of the invention. Referring to FIG. 2, there is shown a host 202, a security key 220, an interface 204, an IC programmer 206, and a substrate 208. The substrate 208 may comprise a chip die 210, a logic LO reference 214a, and a logic HI reference. The chip die 210 may comprise a pad 212. The substrate 208 is substantially similar to the substrate 102. The chip die 210 is substantially similar to the chip die 104. The pad 212 is substantially similar to the pad 108.

The logic LO reference 214a may represent a pin in a chip package 110 that may be electrically coupled to a voltage, for example Ground, that corresponds to a binary '0' value. The logic HI reference 214b may represent a pin in a chip package 110 that may be electrically coupled to a voltage, for example +3.3 volts, that corresponds to a binary '1' value.

The host 220 may be a computer that may be configured to execute IC programming software. The security key 220 may comprise a dongle, or other suitable hardware and/or software device, for example, that authorizes a user to utilize IC programming software. The security key 220 may also comprise a password, or biometric-based identifier, for example. The host 220 may provide a graphical user interface. The interface 204 may be Ethernet, RS-232, or some other suitable communications interface. The IC programmer 206 may receive commands, data, and/or instructions as input and generate configuration vectors that may be utilized for programming and/or enabling features in a target IC device. The IC programmer 206 may also generate a security signal. The security signal may be utilized by the target IC device to authenticate the IC programmer 206.

In operation, the pad 212 may be utilized to enable one or more features in the chip die 210. When a wire bond electrically couples the pad 212 to logic LO 214a, the features may be disabled, for example. When the wire bond electrically couples the pad 212 to logic Hl, the features may be enabled, for example.

The host 202 may be enabled to execute lC programming software by the security key 220. The host 202 may generate instructions, commands, and/or data that are communicated to the IC programmer 206 via the interface 204. The IC programmer 206 may generate a security signal that is sent to the chip die 210. A security processor within the chip die 210 may utilize the security signal to authenticate the IC programmer 206, thereby enabling the IC programmer 206 to transmit configuration vectors to the chip die 210. The configuration vectors received by the chip die 210 from the IC programmer 206 may comprise one or more binary bits. The received binary bits may represent requests for activation of corresponding chip features. For each chip feature activation request, the chip die may evaluate the corresponding pad 212 to determine whether the chip feature has been enabled. If the chip feature has been enabled, and the received configuration vector comprises a request for activation of the chip feature, the chip feature may be activated during operation of the chip die 210. If the chip feature has been enabled, and the received configuration vector does not comprise a request for activation of the chip feature, the chip feature may remain deactivated, but may be activated at a later time. If the chip feature has not been enabled, the chip feature may not be activated regardless of the value for the corresponding one or more bits in the received configuration vector.

One security limitation with the wire bond method of chip feature enablement is that once the IC manufacturer has shipped the IQ to a customer, the customer may subsequently enable features that were not enabled by the IC manufacturer by electrically coupling a previously unconnected pad 212 to a logic LO 212a or logic HI 214b. From a device manufacturing perspective, the wire bond method of chip feature enablement may require that a chip die 210 be assembled into a chip package 110 before testing may be performed. Thus, the IC manufacturer may be required to generate a set of test vectors for each configuration of connected and unconnected wire bonds for a given chip die 210. The wire bond method of chip feature enablement may not be available if the surface of the chip die 210 is not visible, such as in flip chip configurations, to allow wire bonding techniques.

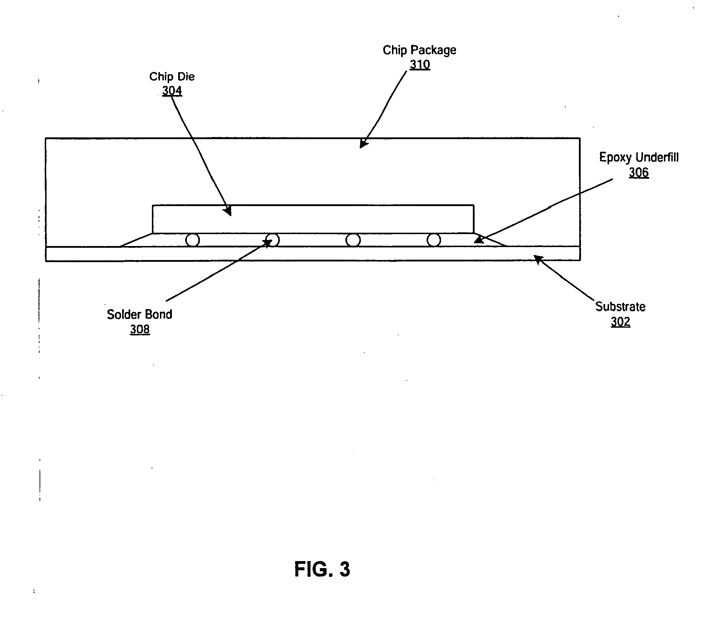

FIG. 3 is a diagram illustrating an exemplary integrated circuit flip chip technique, which may be utilized in connection with an embodiment of the invention. Referring to FIG. 3, there is shown a substrate 302, a chip die 304, epoxy underfill 306, a solder bond 308, and a chip package 310. FIG. 3 illustrates a flip chip packaging technique utilized for some IC devices. The surface of the chip die 304 may be not be visible after bonding to the substrate 308. With flip chip packaging, the chip die 304 may face the substrate 308. Nodes and devices on the chip die 304 may be electrically coupled to pins in the chip package 310 via solder bonds 308. An epoxy underfill 306 may be utilized to encapsulate the chip die 304. Once sealed, nodes and/or devices may not be accessible for wire bonding.

Various embodiments of the invention may comprise a system which utilizes OTP ROM the enables chip features to be enabled and disabled when a chip die 304 surface is not visible by storing binary information in an on-chip OTP ROM. Nodes and/or devices in the on-chip OTP ROM may be electrically coupled to pins in a chip package 310 via solder bonds 308. Thus, an IC programming device, such as a PROM programmer, may be able to store binary information within the on-chip OTP ROM. The stored binary information may then enable or disable chip features within the chip die 304. In one aspect, the OTP characteristic of the OTP ROM may enable binary -information to be stored at a location within the ROM once. The stored binary value may not be subsequently alterable, thereby inhibiting attempts by customers to hack the OTP ROM to enable features that were not enabled by the IC manufacturer.

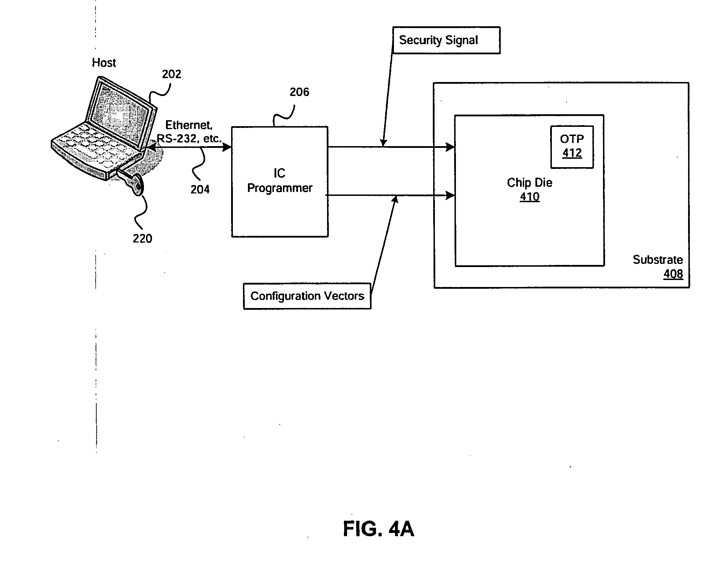

FIG. 4A is a block diagram illustrating exemplary use of internal one-time programmable (OTP) read-only memory (ROM) to configure chip usage features, in accordance with an embodiment of the invention. Referring to FIG. 4A, there is shown a host 202, a security key 220, an interface 204, an lC programmer 206, and a substrate 408. The substrate 408 may comprise a chip die 410. The chip die 410 may comprise an OTP ROM 412. The host 202 may be substantially similar to the host in FIG. 2. The security key 220 is substantially similar to the security key in FIG. 2. The interface 204 may be substantially similar to the interface 204 in FIG. 2. The IC programmer 206 may be substantially similar to the IC programmer 206 in FIG. 2. The substrate 408 is substantially similar to the substrate 102.

In operation, the OTP ROM 412 may be utilized to enable one or more features in the chip die 410. For example, when a bit stored within the OTP ROM 412 may be equal to a binary value '1', one or more corresponding features in the chip die 410 may be enabled. When a bit stored within the OTP ROM 412 may be equal to a binary value '0', one or more corresponding features in the chip die 410 may be disabled, for example.

The IC programmer 206 may generate a security signal that is sent to the chip die 410. A security processor within the chip die 410 may utilize the security signal to authenticate the IC programmer 206, thereby enabling the IC programmer 206 to transmit configuration vectors to the chip die 410. The configuration vectors received by the chip die 410 from the IC programmer 206 may comprise one or more binary bits. The received binary bits may represent requests for activation of corresponding chip features. For each chip feature activation request the chip die 410 may evaluate a corresponding one or more bits within the OTP ROM 412 to determine whether the chip feature has been enabled. If the chip feature has been enabled, and the received configuration vector comprises a request for activation of the chip feature, the chip feature may be activated during operation of the chip die 410. If the chip feature has been enabled, and the received configuration vector does not comprise a request for activation of the chip feature, the chip feature may remain deactivated, but may be activated at a later time. If the chip feature has not been enabled, the chip feature may not be activated regardless of the value for the corresponding one or more bits in the received configuration vector.

In various embodiments of the invention, stored binary information in the on-chip OTP ROM 412 may enable adjustment of values of electrical characteristics of the chip die 410. For example, stored binary information may enable adjustment at least one resistive value. The adjustment of the resistance value may be utilized for resistor trimming of analog circuitry. In addition, stored binary information in the on-chip OTP ROM 412 may enable adjustment of at least one capacitance value. The adjustment of a capacitance value may be performed to reduce signal propagation delays, or in response to oscillations in propagating electrical signals in the chip die 410, for example. Similarly, stored binary information in the on-chip OTP ROM 412 may enable adjustment of at least one inductance value; and/or at least one transconductance value, for example. A transconductance value may be adjusted to modify the behavior of active circuitry, for example amplifier devices, within the chip die 410.

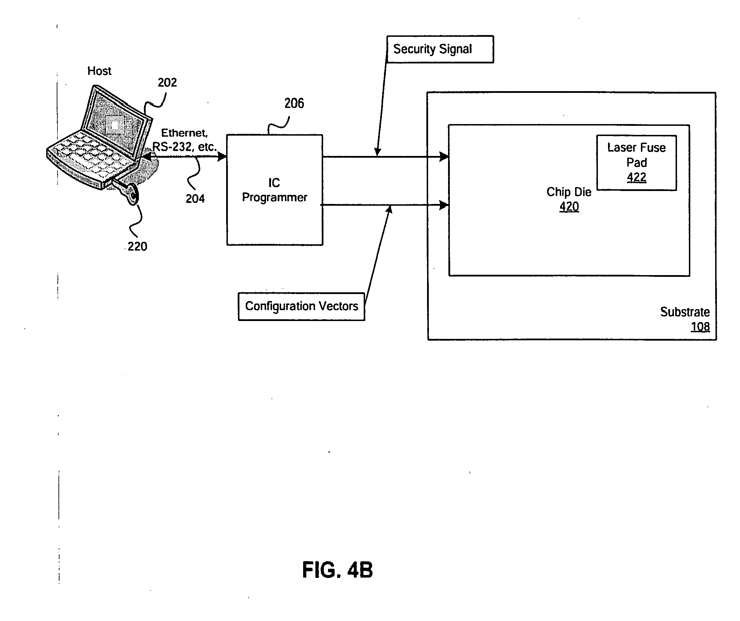

FIG. 4B is a block diagram illustrating exemplary use of internal laser fuses to configure chip usage features, in accordance with an embodiment of the invention. Referring to FIG. 4B, there is shown a host 202, a security key 220, an interface 204, an IC programmer 206, and a substrate 408. The substrate 408 may comprise a chip die 420. The chip die 420 may comprise at least one laser fuse 422. The host 202 may be substantially similar to the host in FIG. 2. The security key 220 is substantially similar to the security key in FIG. 2. The interface 204 is substantially similar to the interface 204 in FIG. 2. The IC programmer 206 is substantially similar to the IC programmer 206 in FIG. 2. The substrate 408 is substantially similar to the substrate 102.

In operation, the laser fuses may be utilized to enable one or more features in the chip die 420. The laser fuses may enable binary information to be stored by exposing a laser fuse pad 422, comprising a material such as tantalum nitride (TaN), to energy from laser light. The laser fuse pad 422 may connect two nodes within the chip die 420, although the initial resistive value for the TaN material may be such that an electrical conduction path is not established between the two connected nodes. The electrical nonconduction of the TaN material may be detected and may correspond to a stored binary value '0'. The exposure to the laser light may change a resistive value of the TaN material, thereby creating an electrical conduction path between the two connected nodes. The electrical conduction of the TaN material may be detected and may correspond to a stored binary value '1'. For example, when a stored binary value '1' corresponding to a laser fuse pad 422 is detected one or more corresponding features in the chip die 420 may be enabled. When a stored binary value '0' corresponding to the laser fuse pad 422 is detected one or more corresponding features in the chip die 420 may be disabled.

The IC programmer 206 may generate a security signal that may be communicated to the chip die 420. A security processor within the chip die 420 may utilize the security signal to authenticate the IC programmer 206, thereby enabling the IC programmer 206 to transmit configuration vectors to the chip die 420. The configuration vectors received by the chip die 420 from the IC programmer 206 may comprise one or more binary bits. The received binary bits may represent requests for activation of corresponding chip features. For each chip feature activation request, the chip die 420 may evaluate a corresponding one or more binary values associated with one or more laser fuse pads 422 to determine whether the chip feature has been enabled. If the chip feature has been enabled, and the received configuration vector comprises a request for activation of the chip feature, the chip feature may be activated during operation of the chip die 420. If the chip feature has been enabled, and the received configuration vector does not comprise a request for activation of the chip feature, the chip feature may remain deactivated, but may be activated at a later time. If the chip feature has not been enabled, the chip feature may not be activated regardless of the value for the corresponding one or more bits in the received configuration vector.

In various embodiments of the invention, stored binary information corresponding to the laser fuse pad 422 may enable adjustment of values of electrical characteristics of the chip die 420. For example, stored binary information may enable adjustment at least one resistance value, capacitance value, inductance value and/or transconductance value.

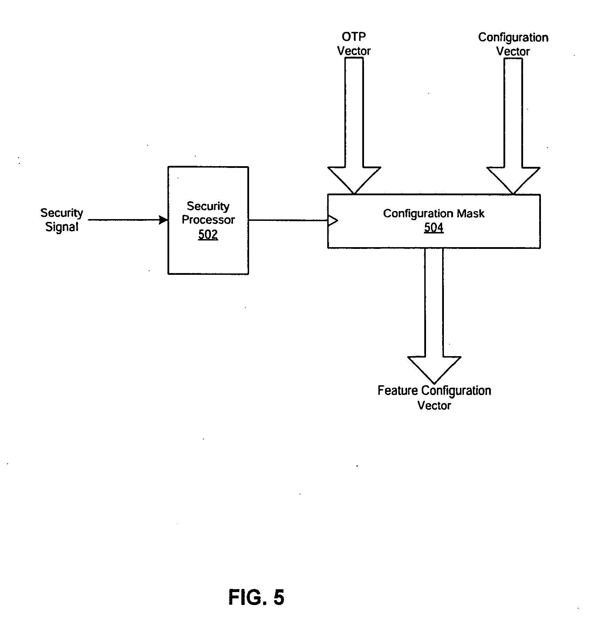

FIG. 5 is a diagram illustrating exemplary generation of bits to configure chip usage features, in accordance with an embodiment of the invention. Referring to FIG. 5, there is shown a security processor 502, and a configuration mask 504. The security processor 502 may receive a security signal, and generate an authentication signal. The security signal may be processed by the security processor 502 in a manner similar to that of password authentication processing. The authentication signal may indicate that a received security signal has been authenticated by the security processor 502.

The configuration mask 504 may receive an authentication signal, an OTP vector, and a configuration vector. The configuration mask 504 may generate a feature configuration vector. The authentication signal may be utilized by the configuration mask 504 to indicate that it may receive one or more configuration vectors. The OTP vector may comprise bits that correspond to stored binary information within the chip die. For example, the stored binary information may be stored within an OTP ROM 412, or may comprise stored bits corresponding to one or more laser fuse pads 422. The configuration vector may comprise a plurality of binary bits, each of which may indicate a request to activate a corresponding one or more chip features. The configuration mask may inspect each of the bits within the OTP vector to determine which of the chip features have been enabled. If a chip feature has been enabled, based on the OTP vector, and an activation request has been received, based on the configuration vector, the configuration mask 504 may generate corresponding bits in the feature configuration vector that enable activation of the requested chip feature. If a chip feature has been enabled, but the configuration vector does not comprise a request for activation of the chip feature, the configuration mask 504 may not generate corresponding bits in the feature configuration vector that enable activation of the requested chip feature. However, the chip feature may be enabled at a later time if a subsequent configuration vector comprising an activation request for the chip feature.

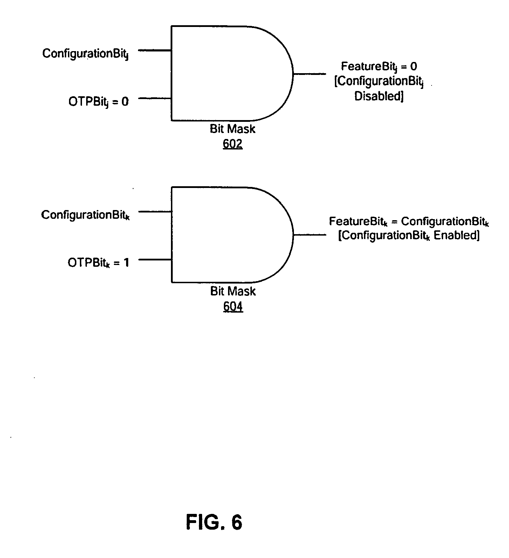

FIG. 6 is a diagram illustrating exemplary enabling of configuration bits for configuring chip usage features, in accordance with an embodiment of the invention. Referring to FIG. 6, there is shown a plurality of bit masks 602 and 604. The bit mask 602 may receive a jt^{h} bit from a configuration vector, ConfigurationBitⱼ, and a j^{th} bit from an OTP vector, OTPBitⱼ. The bit mask 602 may output a bit in a feature configuration vector, FeatureBitⱼ. An exemplary bit mask 602 may comprise a logical AND gate circuit. The binary value of the OTPBitⱼ may be equal to a binary value '0'. Consequently, the output of the exemplary bit mask 602, FeatureBitⱼ, may be equal to a binary value of 0 regardless of the binary value for the bit ConfigurationBitⱼ. In this regard, the ConfigurationBitⱼ may be disabled.

The bit mask 604 may receive a k^{th} bit from a configuration vector, ConfigurationBitₖ, and a k^{th} bit from an OTP vector, OTPBitₖ. The bit mask 604 may output a bit in a feature configuration vector, FeatureBitₖ. An exemplary bit mask 604 may comprise a logical AND gate circuit. The binary value of the OTPBitₖ may be equal to a binary value '1'. Consequently, the output of the exemplary bit mask 604, FeatureBitₖ, may be equal to the binary value of the bit ConfigurationBitⱼ. In this regard, the ConfigurationBitⱼ may be enabled. In various embodiments of the invention, stored binary information, such as bits OTPBitⱼ and OTPBitₖ, may be utilized to enable or disable activation of corresponding chip features based on externally input binary information, such as bits ConfigurationBitⱼ and ConfigurationBitⱼ for example.

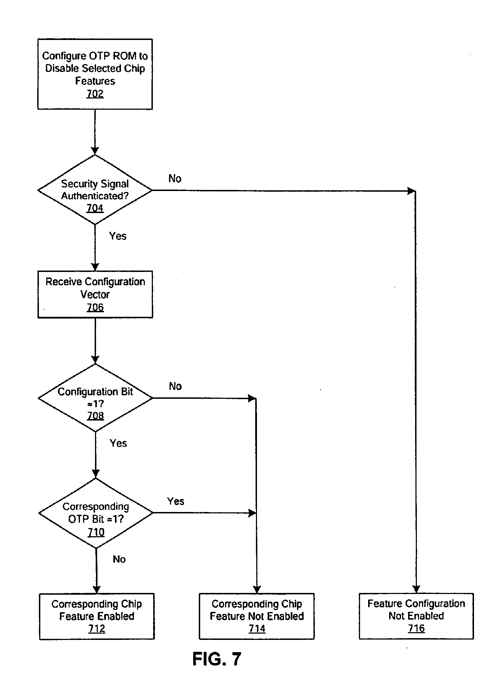

FIG. 7 is a flow chart illustrating exemplary steps for utilizing OTP ROM for disabling chip usage features, in accordance with an embodiment of the invention. Referring to FIG. 7, in step 702, an OTP ROM 412 may be configured to disable selected chip features. In one aspect of this exemplary embodiment, the initial chip feature configuration for the chip die 410 may comprise enabling all chip features within the chip die 410, where the OTP ROM 412 may be programmed to disable selected chip features. Step 704 may determine whether the security signal is authenticated by the security processor 502. If the security signal is not authenticated in step 704, in step 716, feature configuration of the chip die 410 may not be enabled.

If the security signal is authenticated in step 704, in step 706, configuration vectors may be received from an IC programmer 206. Step 708 may determine whether a given configuration bit is equal to a binary value of 1. If step 708 determines that the binary value for the configuration bit is not equal to 1, in step 714, the corresponding chip feature may not be enabled.

If step 708 determines that the binary value for the configuration bit is equal to 1, step 710 may determine whether the corresponding OTP bit is equal to a binary value of 1. If step 710 determines that the binary value for the corresponding OTP bit is equal to 1, in step 714, the corresponding chip feature may not be enabled. If step 710 determines that the binary value for the corresponding OTP bit is not equal to 1, in step 712, the corresponding chip feature may be enabled.

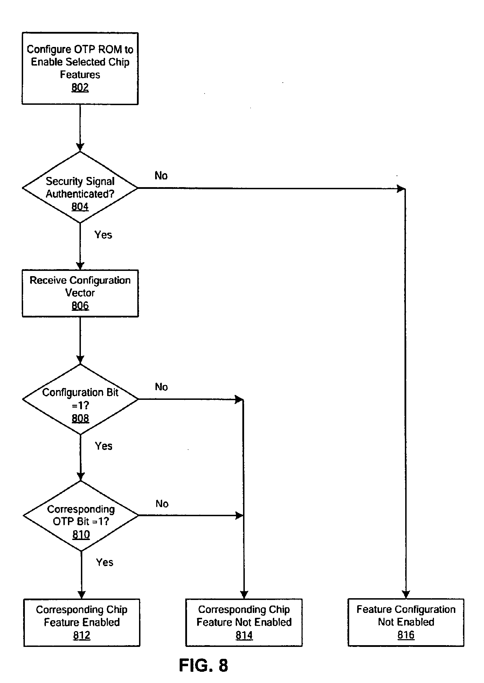

FIG. 8 is a flow chart illustrating exemplary steps utilizing OTP ROM for enabling chip usage features, in accordance with an embodiment of the invention. Referring to FiG. 8, in step 802, an OTP ROM 412 may be configured to enable selected chip features. In one aspect of this exemplary embodiment, the initial chip feature configuration for the chip die 410 may comprise disabling all chip features within the chip die 410, where the OTP ROM 412 may be programmed to enable selected chip features. Step 804 may determine whether the security signal is authenticated by the security processor 502. If the security signal is not authenticated in step 804, in step 816, feature configuration of the chip die 410 may not be enabled.

If the security signal is authenticated in step 804, in step 806, configuration vectors may be received from an IC programmer 206. Step 808 may determine whether a given configuration bit is equal to a binary value of 1. If step 808 determines that the binary value for the configuration bit is not equal to 1, in step 814, the corresponding chip feature may not be enabled.

If step 808 determines that the binary value for the configuration bit is equal to 1, step 810 may determine whether the corresponding OTP bit is equal to a binary value of 1. If step 810 determines that the binary value for the corresponding OTP bit is not equal to 1, in step 814, the corresponding chip feature may not be enabled. If step 810 determines that the binary value for the corresponding OTP bit is equal to 1, in step 812, the corresponding chip feature may be enabled.

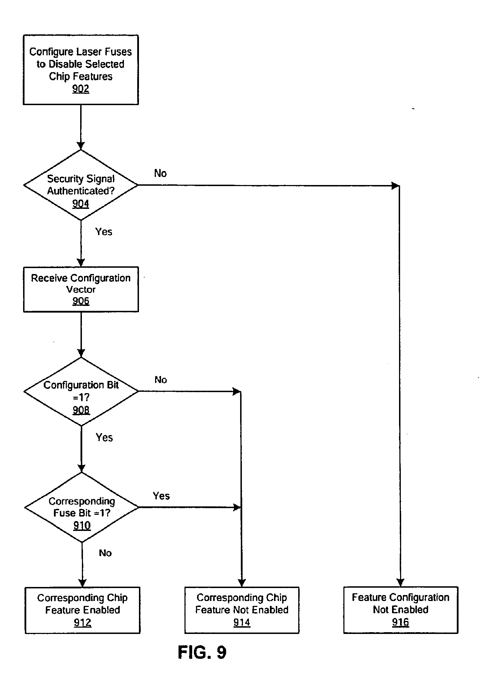

FIG. 9 is a flow chart illustrating exemplary steps for utilizing laser fuses for disabling chip usage features, in accordance with an embodiment of the invention. Referring to FIG. 9, in step 902, one or more laser fuse pads 422 may be configured to disable selected chip features, In one aspect of this exemplary embodiment of the invention, the initial chip feature configuration for the chip die 420 may comprise enabling all chip features within the chip die 420, where the laser fuse pads 422 may be programmed to disable selected chip features. Step 904 may determine whether the security signal is authenticated by the security processor 502. If the security signal is not authenticated in step 904, in step 916, feature configuration of the chip die 420 may not be enabled.

If the security signal is authenticated in step 904, in step 906, configuration vectors may be received from an IC programmer 206. Step 908 may determine whether a given configuration bit is equal to a binary value of 1. If step 908 determines that the binary value for the configuration bit is not equal to 1, in step 914, the corresponding chip feature may not be enabled.

If step 908 determines that the binary value for the configuration bit is equal to 1, step 910 may determine whether a stored bit, corresponding to a laser fuse pad 422, is equal to a binary value of 1. If step 910 determines that the binary value for the corresponding stored bit is equal to 1, in step 914, the corresponding chip feature may not be enabled. If step 910 determines that the binary value for the corresponding stored bit is not equal to 1, in step 912, the corresponding chip feature may be enabled.

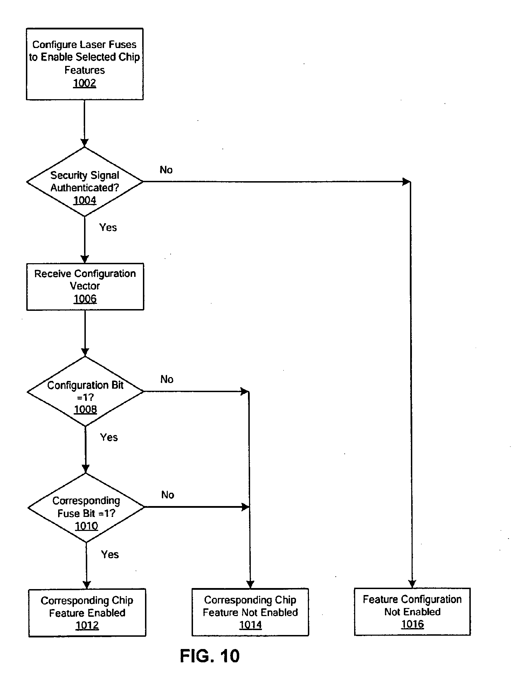

FIG. 10 is a flow chart illustrating exemplary steps utilizing laser fuses for enabling chip usage features, in accordance with an embodiment of the invention. Referring to FIG. 10, in step 1002, one or more laser fuse pads 422 may be configured to enable selected chip features. In one aspect of this exemplary embodiment, the initial chip feature configuration for the chip die 420 may comprise enabling all chip features within the chip die 420, where the laser fuse pads 422 may be programmed to disable selected chip features. Step 1004 may determine whether the security signal is authenticated by the security processor 502. If the security signal is not authenticated in step 1004, in step 1016, feature configuration of the chip die 420 may not be enabled.

If the security signal is authenticated in step 1004, in step 1006, configuration vectors may be received from an IC programmer 206. Step 1008 may determine whether a given configuration bit is equal to a binary value of 1. If step 1008 determines that the binary value for the configuration bit is not equal to 1, in step 1014, the corresponding chip feature may not be enabled.

If step 1008 determines that the binary value for the configuration bit is equal to 1, step 1010 may determine whether a stored bit, corresponding to a laser fuse pad 422, is equal to a binary value of 1. If step 1010 determines that the binary value for the corresponding stored bit is not equal to 1, in step 1014, the corresponding chip feature may not be enabled. If step 1010 determines that the binary value for the corresponding stored bit is equal to 1, in step 1012, the corresponding chip feature may be enabled.

Aspects of a method and system for using one-time programmable (OTP) read-only memory (ROM) to configure chip usage features may comprise a one time programmable (OTP) memory 412 on a chip 410 that is configured to enable control of access to on-chip functions provided by on-chip modules. The chip 410 may enable conditional activation or deactivation of on-chip functions provided by the on-chip modules in response to reception of an external activation or deactivation request based on the contents of the configured OTP memory 412.

The OTP memory 412 may be a programmable read-only memory (PROM), or at least one laser fuse 422. The chip 410 may enable reception of an externally input security word in addition to the external activation or deactivation request. The on-chip functions may be selectively activated, or deactivated, based on the externally input security word, the external activation or deactivation request, and the configured OTP memory 412. The chip 410 may enable adjustment of a value for at least one electrical characteristic based on the configured OTP memory 412. The electrical characteristics may comprise a resistance value, a capacitance value, an inductance value, and/or a transconductance value.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention, In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for configuring an integrated circuit, the method comprising:
configuring a one time programmable (OTP) memory on a chip to securely control access to on-chip functions provided by on-chip modules; and
in response to receiving an external activation or deactivation request, activating or deactivating at least a portion of said on-chip functions provided by said on-chip modules based on said configuring of said OTP memory.

2. The method according to claim 1, wherein said OTP memory is a programmable read-only memory (PROM).

3. The method according to claim 1, wherein said OTP memory comprises at least one laser fuse.

4. The method according to claim 1, comprising receiving an externally input security word in addition to said external activation or deactivation request.

5. The method according to claim 4, wherein said on-chip functions are selectively activated, or deactivated, based on said externally input security word, said external activation or deactivation request, and said configured OTP memory.

6. A machine-readable storage having stored thereon, a computer program having at least one code section for configuring an integrated circuit, the at least one code section being executable by a machine for causing the machine to perform steps comprising:
configuring a one time programmable (OTP) memory on a chip to securely control access to on-chip functions provided by on-chip modules; and
in response to receiving an external activation or deactivation request, activating or deactivating at least a portion of said on-chip functions provided by said on-chip modules based on said configuring of said OTP memory.

7. The machine-readable storage according to claim 6, wherein said OTP memory is a programmable read-only memory (PROM).

8. A system for configuring an integrated circuit, the system comprising:
a chip having a one time programmable (OTP) memory that is configured to enable control of access to on-chip functions provided by on-chip modules; and
said chip enables activation or deactivation of said on-chip functions provided by said on-chip modules, in response to reception of an external activation or deactivation request, based on said configured OTP memory.

9. The system according to claim 8, wherein said OTP memory is a programmable read-only memory (PROM).

10. The system according to claim 8, wherein said OTP memory comprises at least one laser fuse.
